# EUROPÄISCHE PATENTANMELDUNG

(11) **EP 3 760 393 A1**
(43) Veröffentlichungstag der Anmeldung: **06.01.2021**
(21) Anmeldenummer: 20183875.2
(22) Anmeldetag: 03.07.2020
(51) Int. Cl.: B25J 9/16, B25J 15/00, G05B 19/042, G06F 3/01, B25J 19/02

(54) **VERFAHREN UND VORRICHTUNG ZUM STEUERN EINES ROBOTERSYSTEMS MITTELS MENSCHLICHER BEWEGUNG**

(30) Priorität: 03.07.2019 DE 102019118012
(71) Anmelder: Battenberg, Günther, 35274 Kirchhain (DE)
(72) Erfinder: Battenberg, Günther, 35274 Kirchhain (DE)
(74) Vertreter: Stoffregen, Hans-Herbert

(57) **Zusammenfassung**

Die Erfindung bezieht sich auf ein Verfahren zum Steuern zumindest einer Roboterhand eines Robotersystems mittels menschlicher Bewegungsvorgänge. Zur Transformation von Hand- und Fingerbewegungen in einer Roboterbewegung wird vorgeschlagen, dass die menschlichen Bewegungsvorgänge zumindest einer menschlichen Hand in Form von Fingerbewegungen, die bei Montage- und/oder Prüfvorgängen ausgeführt werden, mittels einer Sensorik in Form einer Infrarotkamera oder eines Ultraschalltransmitters erfasst und in eine Bewegung der zumindest einen Roboterhand transformiert werden.

## Beschreibung

Die Erfindung bezieht sich auf ein Verfahren zum Steuern eines Robotersystems mittels menschlicher Bewegung nach dem Oberbegriff des Anspruchs 1 sowie auf eine Vorrichtung zur Durchführung des Verfahrens.

Eine Vorrichtung und ein Verfahren der eingangs genannten Art sind aus der DE 10 2014 006 264 A1 bekannt. Beschrieben wird ein Robotersystem mit drei Robotern, die über eine Steuereinheit angesteuert werden. Ein erster und zweiter Roboter sind seitlich an einem OP-Tisch befestigt und jeweils mit einem Werkzeug bestückt. Ein dritter Roboter ist oberhalb des OP-Tisches befestigt und mit einer Kamera, insbesondere einer Stereokamera, bestückt.

Zur Steuerung der Roboter umfasst das Robotersystem zumindest ein führendes Objekt, dessen Bewegungen von der Steuereinheit erfasst werden, um entsprechende Bewegungen mit geführten Objekten, insbesondere den Endeffektoren der Werkzeuge, nachzubilden.

Als führendes Objekt wird ein beliebiger von Hand beweg- und orientierbarer Gegenstand, z. B. ein Joystick oder eine Klammer verwendet, aber auch die Hand eines Benutzers selber kann als führendes Objekt genutzt werden. Je nach Art des führenden Objekts kann die Steuereinheit mit unterschiedlichen Mitteln zum Erfassen von Position und Orientierung des führenden Objekts zusammenwirken. Die Position des führenden Objekts im Handhabungsraum wird durch einen Referenzpunkt definiert. Als Referenzpunkt ist ein beliebiger Punkt an einer Klammer ausgewählt. Eine Kamera ist mit der Steuereinheit verbunden und überwacht den Hand-Operationsraum, um Position und/oder Orientierung der Klammern zu erfassen. Wenn die Steuereinheit über geeignete Bildauswertungssoftware z. B. in Form einer Gestenerkennung verfügt, kann die Kamera auch unmittelbar die Hände des Benutzers überwachen.

Die EP 2 653 954 B1 betrifft eine Kraftmessungsschnittstelle. Die Kraftmessungsschnittstelle ist angepasst, eine Kraftmessung für jeden der Finger einer Hand einer Bedienperson bereitzustellen.

Die US 2016/0221190 A1 betrifft ein Robotersystem, welches von dem Anlernen von Aktionen profitiert, wie z.B. Manipulationsaktionen, die in Videos dargestellt werden. Das Verfahren umfasst die Verarbeitung eins Sets von Videobildern, um eine Sammlung von semantischen Einheiten zu erhalten.

Die JP 2015-221485 A betrifft einen Roboter bzw. ein Robotersystem sowie eine Steuereinheit und ein Steuerverfahren. Um ein Roboter bereitzustellen, der ausgebildet ist Informationen eines lernenden Inhalts aufzunehmen wird ein Roboter vorgeschlagen, der einen Arm und eine den Arm aktivierende Steuereinheit umfasst. Die Steuereinheit empfängt eine Vielzahl von ersten Bildern, die durch Aufnahme eines Arbeitsobjektes in Zeitserien erhalten werden. Von der Vielzahl der ersten Bilder wird ein zweites Bild extrahiert, wenn ein Bewegungsstatus des Arbeitsobjektes geändert wird. Der Arm wird durch einen virtuellen Servo unter Verwendung des extrahierten zweiten Bildes aktiviert.

Die JP 2011-110621 A betrifft ein Verfahren zur Erzeugung von Teaching-Daten eines Roboters und ein Roboter-Teaching-System. Vorgeschlagen werden eine monokulare Kamera und eine Stereokamera, die ein einzulernendes Bild einschließlich eines Handgelenks und einer Hand eines Lehrers erfasst. Ein Steuergerät bestimmt Handgelenkkoordinaten, die eine Position und eine Orientierung des Handgelenks auf der Basis des Lernbildes bestimmen. Sodann werden Roboterarm Teaching-Daten erzeugt, die die Aktion des Roboterarms auf der Basis der Handgelenkkoordinaten beschreiben.

Die JP 2001-092589 A betrifft ein Modellierungsgerät und ein Speichermedium zum Speichern eines Programms zur Modellierung generierter Daten.

Die DE 10 2013 110 847 B3 betrifft eine Steuervorrichtung zum Steuern eines Robotersystems mit wenigstens einem Roboterarm, an dem ein chirurgisches Instrument befestigt ist, das einen Endeffektor aufweist, wobei die Steuervorrichtung ein Bilderfassungssystem mit einer Kamera umfasst, die die Steuervorgabe wenigstens einer Hand aufzeichnet, auswertet und in entsprechende Steuerbefehle für in eine oder mehrere Komponenten des Robotersystems umsetzt.

Bei dem Verfahren nach dem Stand der Technik werden mittels eines Bilderfassungssystems manuell ausgeführte Gesten erkannt und interpretiert. Die von der Kamera aufgezeichneten Bilddaten werden an eine Steuereinheit weitergeleitet und von einer Auswerteeinheit (Software) ausgewertet. Die Steuereinheit generiert entsprechend der erkannten Gesten Steuerbefehle für das Robotersystem. Das Verfahren ist allerdings nicht in der Lage beliebige Fingerbewegungen, die von den bekannten Gesten abweichen, zu interpretieren.

Die EP 3 366 434 A1 betrifft ein Verfahren zum Überprüfen einer Funktion eines Fahrzeugs und/oder zumindest einer Bedieneinrichtung mittels einer Hand eines Handhabungsgerätes, wobei als Hand eine solche verwendet wird, die fünf bewegliche Finger, Handfläche und Handrücken aufweist und in der Hand mehrere Sensoren zumindest aus der Gruppe Abstandssensor, Drucksensor, Temperatursensor, Feuchtesensor, Inertialsensor, Ultraschallsensor, optischer Sensor integriert werden.

Davon ausgehend liegt der vorliegenden Erfindung die Aufgabe zugrunde, ein Verfahren der eingangs genannten Art derart weiterzubilden, dass beliebige menschliche Bewegungsvorgänge, insbesondere Fingerbewegungen bei ein- oder zweihändigen Montage- oder Prüfbewegungsvorgängen, in eine Roboterbewegung transferiert werden.

Die Aufgabe wird erfindungsgemäß durch die Merkmale des Anspruchs 1 gelöst.

Die menschlichen Bewegungsvorgänge zumindest einer menschlichen Hand in Form von Fingerbewegungen, die z. B. bei Montage- und/oder Prüfvorgängen ausgeführt werden, werden mittels einer Sensorik in Form einer Infrarotkamera oder eines Ultraschalltransmitters erfasst und in eine Bewegung zumindest einer Roboterhand transformiert.

Gemäß einer ersten Ausführungsform werden die Bewegungsvorgänge der zumindest einen Hand in Form der Fingerbewegungen, mittels einer Infrarotkamera erfasst. Die Bewegungsvorgänge werden in einem von der Infrarotkamera ausgehenden Infrarot-Strahlungsfeld ausgeführt, wobei eine Position und/oder Lage der Hand und/oder der Finger durch Analyse des von der Hand und/oder den Fingern reflektierten Lichts bestimmt wird. Das reflektierte Licht wird mit einem in einer Steuereinheit hinterlegten Handmodell verglichen. Aus dem Vergleich werden Steuerdaten für die Roboterhand abgeleitet.

Gemäß einem alternativen Verfahren werden die Bewegungsvorgänge der zumindest einen Hand in Form der Fingerbewegungen, mittels eines Ultraschalltransmitters erfasst, wobei der Transmitter Ultraschallsignale senden und empfangen kann. Die von der Hand und/oder den Fingern reflektierten Ultraschallsignale werden analysiert. Dabei wird die Zeit zwischen Senden der Ultraschallsignale und Empfangen der an der Hand und/oder den Fingern reflektierten Ultraschallsignale gemessen. Aus den Laufzeiten der Ultraschallsignale werden Steuerdaten für die Roboterhand abgeleitet.

Ein besonders vorteilhaftes Verfahren zeichnet sich dadurch aus, dass die Bewegung der Roboterhand und/oder der Roboterfinger ergänzend zu den Steuerdaten aus der Hand und/oder Fingerbewegung mittels an der Roboterhand und/oder Roboterfinger angeordneter Sensoren wie Abstandssensoren, Kraftsensoren oder Drehmomentsensoren bei Annäherung und/oder Kontakt an/mit einem Objekt simultan bzw. in Echtzeit geregelt wird. Dadurch können Mikrobewegungen und Annäherungen ausgeführt werden, wie diese beispielsweise beim Eindrehen einer Schraube in eine Mutter oder beim Einführen eines Bauteils in eine Aussparung erforderlich sind.

Weitere Einzelheiten, Vorteile und Merkmale der Erfindung ergeben sich nicht nur aus den Ansprüchen, den diesen zu entnehmenden Merkmalen - für sich und/oder im Kombination -, sondern auch aus der nachfolgenden Beschreibung von den Zeichnungen zu entnehmenden bevorzugten Ausführungsbeispielen sowie deren Erläuterungen.

Es zeigen:
- Fig. 1: eine schematische Ansicht einer Vorrichtung zur Steuerung eines Robotersystems mittels menschlicher Handbewegung zur Durchführung von Montage- und/oder Prüfarbeiten mit zwei Roboterhänden,
- Fig. 2: eine Vorderansicht einer Roboterhand,
- Fig. 3: eine Draufsicht einer Roboterhand und
- Fig. 4: eine schematische Darstellung von Verfahrensschritten eines Verfahrens zur Steuerung eines Robotersystems mittels menschlicher Handbewegung.

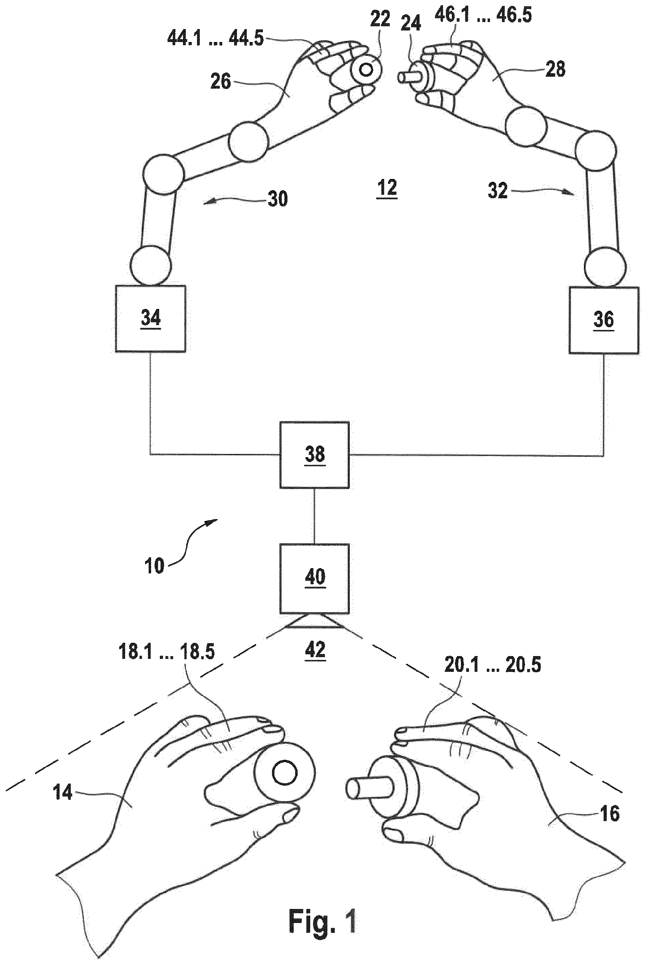

Fig. 1 zeigt eine schematische Darstellung einer Vorrichtung 10 zur Steuerung eines Robotersystems 12 mittels Bewegung zumindest einer Hand 14, 16 und/oder Finger 18.1 ... 18.5; 20.1 ... 20.5 der zumindest einen Hand zur Durchführung von Montage- und/oder Prüfarbeiten an zumindest einem Objekt 22, 24 mit Roboterhänden 26, 28 die von Roboterarmen 30, 32 ausgehen. Die Roboterarme 30, 32 weisen jeweils eine Robotersteuerung 34, 36 auf, die mit einer Steuervorrichtung 38 zum Steuern der verschiedenen Komponenten des Robotersystems 12 mittels menschlicher Bewegung, insbesondere ein- oder zweihändiger Fingerbewegung gekoppelt ist.

Die Steuervorrichtung 38 ist mit einer Sensorik 40 in Form einer Infrarotkamera oder eines Ultraschalltransmitters verbunden, mittels der ein- oder zweihändige menschliche Bewegungen der Hände 14, 16 sowie Bewegungen von Fingern 18.1 ... 18.5; 20.1 ... 20.5 der Hände erfasst werden können. Die menschlichen Bewegungsvorgänge der zumindest einen menschlichen Hand 14, 16, insbesondere Fingerbewegungen, die z. B. bei Montage- und/oder Prüfvorgängen ausgeführt werden, werden mittels der Sensorik 40 insbesondere einer Infrarotkamera oder eines Ultraschalltransmitters erfasst und in eine Bewegung der zumindest einen Roboterhand 26, 28 transformiert.

Gemäß der dargestellten Ausführungsform werden die Bewegungsvorgänge der zumindest einen Hand 14, 16, insbesondere Fingerbewegungen, mittels der Infrarotkamera 40 erfasst.

Die Bewegungsvorgänge werden in einem von der Infrarotkamera 40 ausgehenden Infrarot-Strahlungsfeld 42 ausgeführt, wobei eine Position und/oder Lage der Hand 14, 16 und/oder der Finger 18.1 ... 18.5; 20.1 ... 20.5 durch Analyse des von der Hand 14, 16 und/oder den Fingern 18.1 ... 18.5; 20.1 ... 20.5 reflektierten Lichts bestimmt wird. Das reflektierte Licht wird mit einem in der Steuereinheit 38 hinterlegten Handmodell verglichen. Aus dem Vergleich werden Steuerdaten für die Robotersteuerung 34, 36 der Roboterhand 26, 28 abgeleitet.

Gemäß einem alternativen Verfahren können die Bewegungsvorgänge der zumindest einen Hand, insbesondere Fingerbewegungen, mittels eines Ultraschalltransmitters erfasst werden, wobei der Transmitter Ultraschallsignale senden und empfangen kann. Die von der Hand und/oder den Fingern reflektierten Ultraschallsignale werden analysiert. Dabei wird die Zeit zwischen Senden der Ultraschallsignale und Empfangen der an der Hand und/oder den Fingern reflektierten Ultraschallsignale gemessen. Aus den Laufzeiten der Ultraschallsignale werden Steuerdaten für die Roboterhand abgeleitet.

Ein besonders vorteilhaftes Verfahren zeichnet sich dadurch aus, dass die Bewegung der Roboterhand 26, 28 und/oder von Roboterfingern 44.1 ... 44.5; 46.1 ... 46.5 ergänzend zu den Steuerdaten aus der Hand und/oder Fingerbewegung mittels an der Roboterhand 26, 28 und/oder den Roboterfingern 44.1 ... 44.5; 46.1 ... 46.5 angeordneter Sensoren wie Abstandssensoren, Kraftsensoren oder Drehmomentsensoren bei Annäherung und/oder Kontakt an/mit Objekt 22, 24 simultan bzw. in Echtzeit geregelt wird.

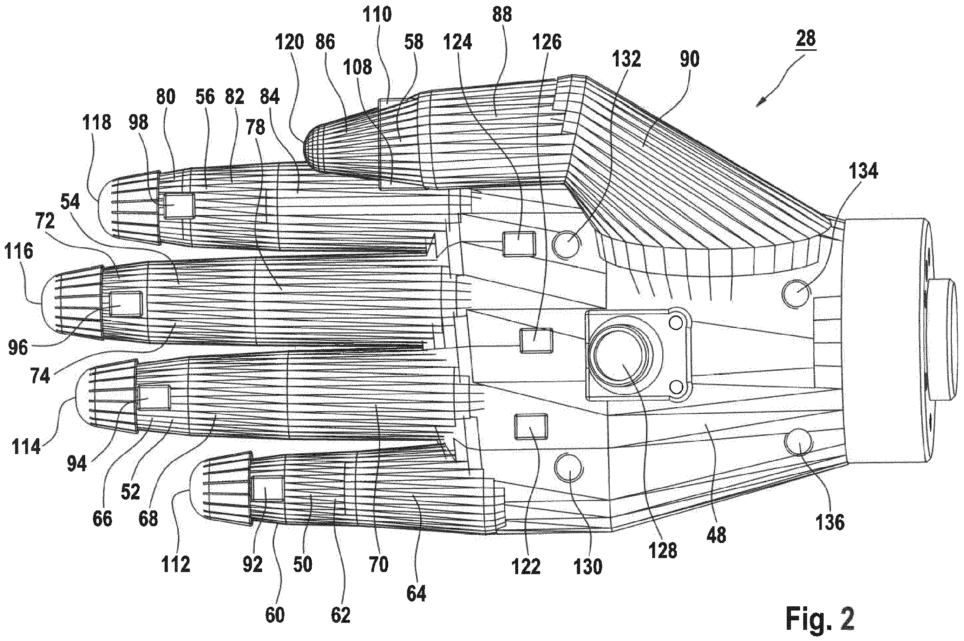

Eine solche Roboterhand ist in Fig. 2 in Richtung einer Handfläche 48 betrachtet dargestellt. Die Hand 28 weist - wie die menschliche Hand - fünf Finger auf, nämlich einen kleinen Finger 50, einen Ringfinger 52, einen Mittelfinger 54, einen Zeigefinger 56 sowie einen Daumen 58. Die Finger 50 ... 58 weisen jeweils drei gelenkig zueinander und zu der Handfläche 48 bewegliche Glieder 60; 62, 64, 66; 68, 70, 72; 74, 78, 80, 82, 84 auf. Auch der Daumen weist drei zueinander und zu der Handfläche 48 bewegliche Glieder 86, 88, 90 auf, so dass in Folge dessen die Bewegung einer menschlichen Hand nachgebildet werden kann.

In der Hand 28 sind eine Vielzahl von Sensoren integriert, um gewünschte Überprüfungen vorzunehmen bzw. Funktionen überprüfen zu können.

Durch die Nachbildung der menschlichen Hand besteht auch die Möglichkeit, Greif- und Montageprozesse durchzuführen, wobei insbesondere ein Anlernen von einem Werker über die Erfassung von Hand- und/oder Fingerbewegungen mittels der Sensorik 40 erfolgen kann. Die Möglichkeit einer Interaktion der 5-Finger-Hand 28 mit einer menschlichen Hand für Assistenzsysteme ist ebenfalls möglich. So kann ein Werker an die Hand 28 ein Werkstück übergeben und umgekehrt.

Entsprechend der zeichnerischen Darstellung sind in den distalen Gliedern 60, 66, 72, 80 der Finger 50, 52, 54, 56 sowohl auf der Vorder- als auch an der Rückseite Abstandssensoren 92, 94, 96, 98, 100, 102, 102, 106 integriert. Hierbei kann es sich um Time-Off-Flight-Sensoren handeln. Auch der Daumen 58 weist entsprechende Abstandssensoren 108, 110 auf, wobei diese seitlich an dem distalen Glied 86 positioniert sein können. Andere Anordnungen sind gleichfalls möglich.

Ferner ist in den Kuppen der Finger 50, 52, 54, 56 ein Drucksensor 112, 114, 116, 118, 120 integriert, die in der Fig. 1 dargestellt sind.

In der in Fig. 1 dargestellten Handfläche 48 finden sich des Weiteren Abstandssensoren 122, 124, 126 und ein optischer Sensor 128 in Form einer Kamera. In der Handfläche 48 können des Weiteren Infrarotstrahler 130, 132, 134, 136 integriert sein.

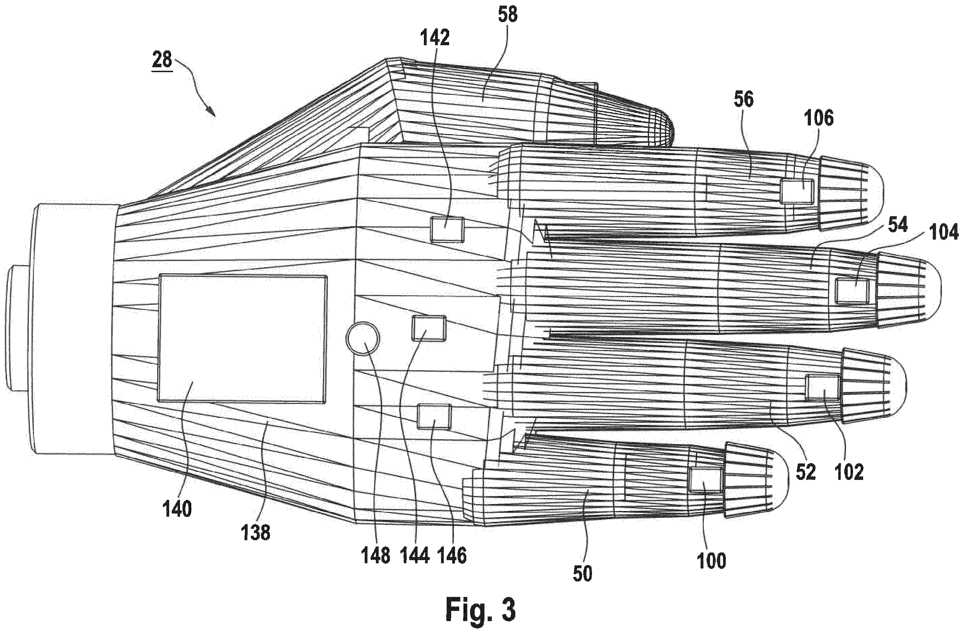

In Fig. 3 ist die Hand 28 von der Rückseite aus betrachtet dargestellt. In dem Handrücken 138 ist ein Inertialsensor 140 integriert. Ferner finden sich zwischen dem Inertialsensor und den Fingern 50, 52, 54, 56 weitere Abstandssensoren 142, 144, 146, 148.

Gemäß der Erfindung werden ein- oder zweihändige Montage- und/oder Prüfbewegungsvorgänge von ein- oder zweihändigen menschlichen Bewegungen der Hände 14, 16 bzw. Finger 18.1 ...... 18.5 und 20.1 ...... 20.5 mittels der Sensorik 40 abgeleitet und direkt in die Bewegung der Roboterhände 26, 28 übertragen.

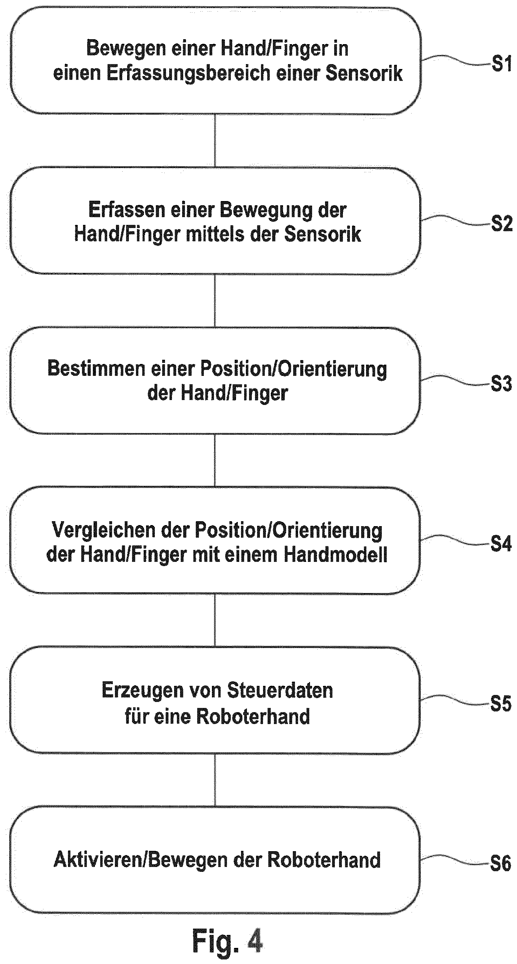

Fig. 4 zeigt verschiedene Verfahrensschritte des Verfahrens zum Steuern des Robotersystems 10 gemäß Fig. 1 bis 3.

In Schritt S1 werden die Hände 14, 16 in den Erfassungsbereich der Sensorik 40 hinein bewegt, um eine Montagebewegung durchzuführen.

In Schritt S2 werden die Bewegungen der Hände 14, 16 bzw. Finger 18.1 ...... 18.5; 20.1 ...... 20.5 mittels des Sensorik 40 erfasst.

Gemäß Ausführungsbeispiel ist die Sensorik 40 eine Infrarotkamera, die Infrarotstrahlen aussendet. Die an den Handflächen und Fingern reflektierten Lichtstrahlen werden in Schritt S3 durch die Sensorik 40 empfangen und analysiert.

Die reflektierten Lichtstrahlen werden in Schritt S4 mit einem in der Steuervorrichtung 38 hinterlegten Handmodell verglichen. Der Vergleich wird jeweils für die linke Hand 14 und die rechte Hand 16.

In Schritt S5 werden entsprechend des Vergleichs der reflektierten und empfangenen Lichtstrahlen mit den entsprechenden Handmodellen Steuerdaten für die Ansteuerung der Roboterhände 26, 28 erzeugt.

In Schritt S6 wird die Roboterhand und/oder die Roboterfinger entsprechend der Steuerdaten angesteuert.

Die bloße Übertragung von Bewegungsinformationen kann jedoch dazu führen, dass z.B. bei der Montage von Gegenständen erforderliche Kräfte und Orientierungen fehlerhaft sind.

Zu Lösung des Problems ist vorgesehen, dass in den Roboterhänden 26, 28 Sensoren integriert sind. Über die Sensoren erfolgt während der Handhabung des Objektes eine Rückkopplung zu den jeweiligen Robotersteuerungen 34, 36, wodurch ergänzend zu den von den Händen und/oder Fingern vorgegebenen Bewegungen simultan eine Feinregelung der Bewegung erfolgt, um eine definierte physikalische Größe wie Kraft und/oder Drehmoment auf das zu montierende oder zu prüfende Objekt einleiten zu können.

Ergänzend zu der Sensorik 40 können 3D-Tiefensensoren eingesetzt werden, wie z.B. Tiefenkameras, wodurch z.B. eine 6D-Lage der Objekte erfasst werden kann.

Folglich können während einer Greif- oder Drehbewegung Feinregelungen der Bewegung der Roboterhand mittels der Robotersteuerung 34, 36 unabhängig von den Bewegungen der Finger der realen Hand durchgeführt werden. Die Regelungen erfolgen in Echtzeit.

## Patentansprüche

1. Verfahren zum Steuern zumindest einer Roboterhand eines Robotersystems mittels menschlicher Bewegungsvorgänge,
**dadurch gekennzeichnet,**
**dass** die menschlichen Bewegungsvorgänge zumindest einer menschlichen Hand in Form von Fingerbewegungen, die bei Montage- und/oder Prüfvorgängen ausgeführt werden, mittels einer Sensorik in Form einer Infrarotkamera oder eines Ultraschalltransmitters erfasst und in eine Bewegung der zumindest einen Roboterhand transformiert werden.

2. Verfahren nach Anspruch 1,
**dadurch gekennzeichnet,**
**dass** die Bewegungsvorgänge in einem von der Infrarotkamera ausgehenden Infrarot-Strahlungsfeld ausgeführt werden, wobei eine Position und/oder Lage der Hand und/oder der Finger durch Analyse des von der Hand und/oder den Fingern reflektierten Lichts bestimmt wird.

3. Verfahren nach Anspruch 2,
**dadurch gekennzeichnet,**
**dass** das reflektierte Licht analysiert und mit zumindest einem in einer Steuereinheit hinterlegten Handmodell verglichen wird und dass aus dem Vergleich Steuerdaten für die Roboterhand abgeleitet werden.

4. Verfahren nach Anspruch 1,
**dadurch gekennzeichnet,**
**dass** die Bewegungsvorgänge der zumindest einen Hand in Form von Fingerbewegungen mittels eines Ultraschalltransmitters erfasst werden, wobei der Ultraschalltransmitter Ultraschallsignale sendet und empfängt, dass die von der Hand und/oder den Fingern reflektierten Ultraschallsignale analysiert werden, wobei die Zeit zwischen Senden der Ultraschallsignale und Empfangen der an der Hand und/oder den Fingern reflektierten Ultraschallsignale gemessen wird und dass aus den Laufzeiten der Ultraschallsignale Steuerdaten für die Bewegung der zumindest einen Roboterhand abgeleitet werden.

5. Verfahren nach zumindest einem der vorhergehenden Ansprüche,
**dadurch gekennzeichnet,**
**dass** die Bewegung der Roboterhand und/oder der Roboterfinger ergänzend zu den Steuerdaten aus der Hand und/oder Fingerbewegung mittels an der Roboterhand und/oder Roboterfinger angeordneter Sensoren wie Abstandssensoren, Kraftsensoren oder Drehmomentsensoren bei Annäherung und/oder Kontakt an/mit einem Objekt simultan bzw. in Echtzeit geregelt wird.

6. Vorrichtung, ausgebildet zu Durchführung des Verfahren nach einem der Ansprüche 1 bis 5, umfassend ein Robotersystem mit zumindest einer von einem Roboterarm ausgehenden Roboterhand, eine Robotersteuerung zur Steuerung der zumindest einen Roboterhand, eine Sensorik in Form einer Infrarotkamera oder eines Ultraschalltransmitter zur Erfassung menschlicher Bewegungsvorgänge zumindest einer menschlichen Hand in Form von Fingerbewegungen, die bei Montage- und/oder Prüfvorgängen ausgeführt werden, und eine mit der Sensorik gekoppelte Steuereinrichtung zu Analyse der von der Sensorik erfassten Bewegungen und Erzeugung von Steuerdaten für die zumindest eine Robotersteuerung.

7. Vorrichtung nach Anspruch 6,
**dadurch gekennzeichnet,**
**dass** als Roboterhand eine solche verwendet wird, die fünf bewegliche Finger, Handfläche und Handrücken aufweist und in der Hand mehrere Sensoren zumindest aus der Gruppe Abstandssensor, Drucksensor, Temperatursensor, Feuchtesensor, Inertialsensor, Ultraschallsensor, optischer Sensor integriert sind.
